(19) Europäisches Patentamt

European Patent Office

Office européen des brevets

(11) **EP 0 624 560 B1**

(12) **FASCICULE DE BREVET EUROPEEN**

(45) Date de publication et mention
de la délivrance du brevet:
**19.07.2000 Bulletin 2000/29**

(51) Int. Cl.⁷: **C04B 38/00**, B01J 27/224,
F01N 3/00

(21) Numéro de dépôt: **94420138.3**

(22) Date de dépôt: **04.05.1994**

(54) **Fabrication de mousse de carbure de silicium a partir d'une mousse de polyuréthane imprégnée de résine contenant du silicium**

Herstellung Siliciumcarbidschäume aus einem Polyurethanschaum impregniert mit siliciumenthaltendem Harz

Preparation of silicium carbide foam from a polyurethane foam impregnated with silicium-containing resin

(84) Etats contractants désignés:
**BE DE DK ES FR GB IT NL SE**

(30) Priorité: **13.05.1993 FR 9306015**

(43) Date de publication de la demande:
**17.11.1994 Bulletin 1994/46**

(73) Titulaire:
**PECHINEY RECHERCHE (Groupement d'Intérêt Economique régi par l'Ordonnance du 23 Septembre 1967)**
**92400 Courbevoie la Défense 5 (FR)**

(72) Inventeurs:
• **Prin, Marie**
  **F-38430 Moirans (FR)**
• **Baluais, Gérard**
  **F-38140 La Murette (FR)**

(74) Mandataire:
**Mougeot, Jean-Claude et al**
**PECHINEY**
**Immeuble "SIS"**
**217 ,cours Lafayette**
**69451 Lyon Cedex 06 (FR)**

(56) Documents cités:
**EP-A- 0 337 285        EP-A- 0 440 569**
**EP-A- 0 511 919        FR-A- 1 484 116**

• **CHEMICAL ABSTRACTS, vol. 89, no. 12, 18 Septembre 1978 Columbus, Ohio, US; abstract no. 94396w, & DATABASE WPI Week 7804 Derwent Publications Ltd., London, GB; AN 78-07448A & JP-A-52 148 467 (I.C.E. CO. & CATALER KOGYO KK) 9 Décembre 1977**
• **DATABASE WPI Week 8837 Derwent Publications Ltd., London, GB; AN 88-261527 & JP-A-63 190 779 (KANEBO KK) , 8 Août 1988**
• **AMERICAN CERAMIC SOCIETY BULLETIN, vol. 71, no. 11, Novembre 1992 COLUMBUS US, pages 1674-1682, J.SAGGIO-WOYANSKY ET AL 'Processing of Porous Ceramics'**

**Description**

DOMAINE TECHNIQUE DE L'INVENTION.

L'invention concerne le domaine technique des structures poreuses ou mousses en carbure de silicium destinées à servir de catalyseurs ou de supports de catalyseurs pour l'industrie chimique ou pétrochimique ou de catalyseurs ou de filtres pour les pots d'échappement.

PROBLEME POSE.

La surface spécifique d'un catalyseur est due à trois types de porosités: une macroporosité due à des pores de diamètre moyen supérieur à 2 μm, une mésoporosité due à des pores de diamètre moyen 30-350 angströms et une microporosité due à des pores de diamètre moyen 5-15 angströms. Un catalyseur doit présenter une macroporosité suffisante pour donner aux gaz à traiter accès aux micro- et surtout mésopores responsables de l'activité catalytique proprement dite.

Pour certaines applications catalytiques, en particulier pour la catalyse de l'oxydation des gaz d'échappement, on a besoin de choisir la géométrie du support ou du catalyseur et de le réaliser sous forme de pièces monolithiques, en assurant l'accessibilité du catalyseur aux gaz à traiter par sa macroporosité. Pour les filtres d'échappement de moteurs Diesel, le problème est sensiblement le même, à la différence près que la mésoporosité n'a pas besoin d'être aussi développée puisque la filtration ne met en jeu que des phénomènes physiques et non une réaction catalytique.

Les inventeurs se sont posé le problème d'obtenir des supports de catalyseurs en mousse de carbure de silicium pratiquement pur sous forme monolithique et présentant une importante macroporosité ouverte permettant un accès facile aux gaz réactionnels.

OBJET DE L'INVENTION.

L'invention a pour objet un procédé de fabrication de supports de catalyseurs ou de filtres en carbure de silicium présentant les propriétés ci-dessus indiquées, à partir d'une mousse de polyuréthane que l'on imprègne d'une suspension de silicium dans une résine organique polymérisable et que l'on porte à une température élevée pour successivement polymériser la résine, carboniser la résine et la mousse de polyuréthane, enfin carburer le carbone provenant de la résine et de la mousse.

Elle a également pour objet des structures poreuses en carbure de silicium pouvant s'appliquer à la production de pots catalytiques ou de filtres pour moteurs Diesel.

ART ANTERIEUR.

Le brevet européen EP-B-0313480 (Péchiney Electrométallurgie) divulgue un procédé de production de grains de carbure de silicium ayant une surface spécifique au moins égale à 100 m$^2$/g destinés à servir de support de catalyseurs et consistant à générer des vapeurs de SiO par chauffage d'un mélange SiO$_2$ + Si à une température comprise entre 1100 et 1400°C, sous une pression comprise entre 0,1 et 1,5 hPa et à faire réagir ces vapeurs sur du carbone réactif de surface spécifique supérieure à 200 m$^2$/g à une température comprise entre 1100 et 1400°C.

La demande de brevet européen EP-A-0440569 (Péchiney Electrométallurgie) décrit un procédé d'obtention de corps solides poreux en carbure réfractaire à surface spécifique élevée caractérisé en ce que l'on mélange un composé organique polymérique et/ou copolymérisable, carbonisable et capable de donner un squelette solide carboné, avec une poudre de métal ou de métalloïde ou l'un de ses composés réductible par le carbone, l'on met en forme le mélange, l'on réticule ou durcit le composé organique, l'on traite thermiquement le mélange mis en forme pour carboniser entre 500 et 1000°C ledit composé, puis pour opérer la carbonisation.

La demande de brevet européen EP-A-0511919 (Péchiney Electrométallurgie) décrit un support sur lequel le produit catalytiquement actif est déposé. Le support présente des propriétés mécaniques ou physiques intéressantes pour les conditions de fonctionnement requises, mais une surface spécifique médiocre. Le produit catalytiquement actif, un carbure métallique, est obtenu par immersion du support dans une suspension d'un composé réductible du métal dans une solution d'un composé organique, carbonisation de ce composé, réduction du composé métallique et carburation du métal. Le carbure ainsi obtenu présente une surface spécifique élevée. De préférence, le support est constitué de carbure de silicium préparé par carbonisation d'une pâte contenant du silicium, du carbone et une résine organique.

La demande de brevet européen non publiée 92-420429 (GIE Péchiney Recherche) décrit une mousse de carbure métallique ou de carbure de silicium destinée à servir de catalyseur ou de support de catalyseur pour l'industrie chimique ou pétrochimique ou pour les pots d'échappement, ainsi que le procédé pour la fabriquer. La mousse se présente sous la forme d'un réseau tridimensionnel de cages interconnectées dont la longueur des arêtes est comprise entre 50 et 500 micromètres, dont la surface BET est comprise entre 20 et 100 m$^2$/g. Le procédé de fabrication consiste à partir d'une mousse de carbone, à augmenter sa surface spécifique par un traitement d'activation par le gaz carbonique, enfin à mettre en contact la mousse ainsi activée avec un composé volatil du métal dont on veut obtenir le carbure.

Aucun de ces procédés ci-dessus ne décrit la mise en contact d une suspension organique contenant du silicium avec un précurseur de mousse organique.

Le document US 5093389 (équivalent du document EP-A-0337285) décrit l'obtention d'une mousse minérale à partir d'une mousse de polyuréthanne imprégnée par une suspension de silicium dans une résine; le produit final est un squelette de silicium stabilisé par liaison par réaction à l'aide d'éléments comme le carbone, l'oxygène et/ou l'azote, avec formation de phases du type carbure et/ou nitrure et/ou oxycarbure (US 5093389 col.4 l.52 - col.5 l.2 ou col.5 l.9-17).

DESCRIPTION DES FIGURES

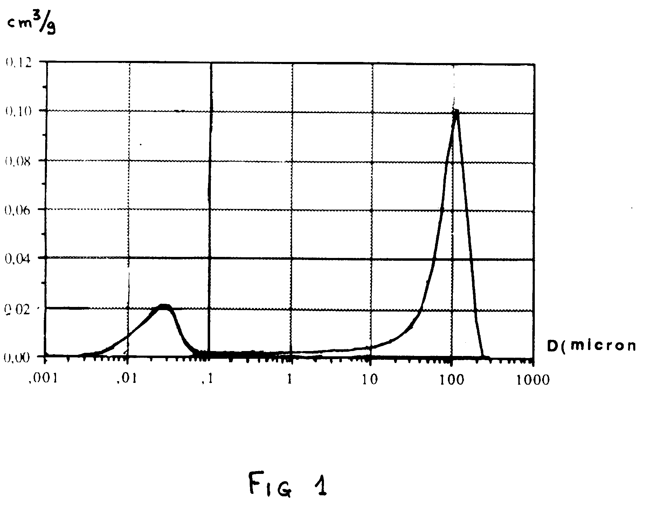

La figure 1, unique, montre la distribution du volume poreux en fonction du diamètre des pores d'un échantillon de mousse selon l'invention.

DESCRIPTION DE L'INVENTION.

Le procédé de fabrication de carbure de silicium à grande surface spécifique à partir d'une mousse de polyuréthane selon l'invention consiste en :

a) la préparation de cette mousse de polyuréthane ;
b) élimination éventuelle du solvant par chauffage;
c) polymérisation de la résine par augmentation progressive de la température jusque 250°C avec une vitesse de montée en température voisine de 5°C/min;
d) carbonisation simultanée de la mousse de polyuréthane et de la résine par augmentation progressive de la température de 250°C à 1000°C sous atmosphère inerte;
e) carburation du silicium contenu dans la suspension de résine par le carbone issu de la carbonisation de la mousse et de la résine par augmentation progressive de la température de 1000°C à une température T comprise entre 1300 et 1600°C avec une vitesse de montée en température voisine de 3°C/min sous atmosphère inerte et maintien pendant deux heures à la température T, toujours sous atmosphère inerte;
f) refroidissement du carbure de silicium ainsi obtenu; et est caractérisé en ce que la préparation a) de la mousse de polyuréthane consiste en :

a1) une imprégnation de celle-ci avec une suspension de Si en poudre dans au moins une résine organique oxygénée et un solvant éventuel, le rapport pondéral de Si à la résine étant compris entre 0,58 et 1,17 et de préférence entre 0,58 et 0,8 et
a2) l'élimination de l'excédent de la suspension de telle sorte que le rapport de la masse de résine à la masse de polyuréthane soit compris entre 2.5 et 5.

Chacune de ces étapes successives est maintenant décrite en détail.

**a1) imprégnation de la mousse de polyuréthane avec une suspension de poudre de silicium dans une résine organique.**
**a2) élimination de l'excédent de la suspension de telle sorte que le rapport de la masse de résine imprégnant le polyuréthane à la masse de polyuréthane soit compris entre 2,5 et 5;**

Le choix de la résine est dicté par deux considérations: sa viscosité et le pourcentage massique d'oxygène dans la molécule de résine polymérisée. La viscosité doit être choisie assez basse pour que la suspension de résine puisse pénétrer au coeur de la mousse, inférieure à 3 Pa.s. Cette viscosité peut être ajustée par dilution de la résine par un solvant tel l'alcool ou par ajout de noir de carbone très fin. Des tests préliminaires, consistant à immerger des échantillons cubiques de mousse de 30 mm d'arête et à vérifier si la résine a réussi à pénétrer à coeur, peuvent être utilement appliqués.

Le pourcentage massique d'oxygène a une grande importance car au moment de la carbonisation de la mousse imprégnée, il contribue par une oxydation ménagée du carbone qui se forme, à activer ce carbone c'est-à-dire à développer sa mésoporosité et à accroître sa surface spécifique. On a trouvé que le pourcentage massique d'oxygène dans le polymère obtenu à partir de la résine devait être d'au moins 15 % et de préférence voisin de 25 %. Parmi ces résines on trouve les polycarbonates, les polyesters et surtout les polymères obtenus par polycondensation de l'alcool furfurylique dont le pourcentage d'oxygène est de 26 % environ qui constituent le polymère préféré.

La répartition du diamètre des grains de silicium doit être centrée sur une valeur moyenne D50 (en volume) inférieure à 75 micromètres et, de préférence, inférieure à 10 micromètres.

La quantité et la composition de la suspension d'imprégnation sont définies par deux coefficients:

$$a = \text{masse de résine/ masse de polyuréthane} = M_r/M_{pu}$$

$$b = \text{masse de silicium/ masse de résine} = M_{Si}/M_r$$

Dans tout ce qui suit, lorsqu'il est question de la masse $M_R$ de résine, il faut comprendre le total résine plus le catalyseur de polymérisation éventuel. Par exemple, à la résine préférée qui est l'alcool furfurylique on ajoute comme catalyseur de l'hexaméthylènetétramine.

En ce qui concerne le coefficient a, il est clair que s'il est trop faible la structure carbonée obtenue sera très poreuse et aura donc une tenue mécanique insuffisante; s'il est trop élevé, la structure macroporeuse sera bouchée par les produits de carbonisation de la résine et ne sera donc pas conservée. Il faut cependant que la quantité de résine soit suffisante pour imprégner jusqu'à coeur la masse de polyuréthane. Il peut s'avérer ainsi nécessaire d'ajuster la viscosité de la résine à chaud en jouant sur la quantité de catalyseur de polymérisation et la viscosité à froid en la diluant dans de l'alcool ou en ajoutant du noir de carbone.

Les inventeurs ont trouvé que ce coefficient a devait être compris entre 2,5 et 5. Cette limitation de la valeur de a s'explique ainsi:

Le carbone issu de la carbonisation du polyuréthane et de la résine occupe un certain volume "réel" ou "plein", (quotient de la masse de carbone $M_C$ par sa masse volumique $d_C$), égal à $V_C$. Pour obtenir une solidité suffisante de la mousse carbonée, il faut que ce volume de carbone $V_C$ occupe au moins 25 % du volume "réel" ou "plein" $V_{pu}$ du polyuréthane initial (quotient de la masse de polyuréthane $M_{pu}$ par sa masse volumique $d_{pu}$). Pour conserver une structure macroporeuse de la mousse carbonée, il faut que ce volume de carbone $V_C$ occupe au plus 100 % du volume "réel" ou "plein" $V_{pu}$ du polyuréthane initial. Si l'on appelle x le rapport $V_C/V_{pu}$ qui est un rendement en volume de la carbonisation, on doit donc avoir:

$$0,25 < x < 1$$

Un calcul simple permet de calculer le rendement en poids $R_x$ correspondant à x:

$$R_x \text{ (en \%)} = 100.M_C/(M_{pu}.(1 + a)) \qquad (1)$$
$$= 100 . x . (d_C/d_{pu})/(1 + a)$$

Le coefficient b se déduit facilement de la stoechiométrie de la réaction de formation du SiC:

$$Si + C = SiC$$

La masse de silicium $M_{Si} = (28/12).M_C = 2,333.M_C$
(masses atomiques de Si et C = 28 et 12, respectivement)

Or d'après (1), $M_C = (R/100).M_{pu}.(1 + a)$

On a donc finalement:

$$M_{Si} = 2,333.(R/100).Mpu.(1 + a) \qquad (2)$$

et

$$M_{Si} = b. M_r \text{ avec } b = (M_{Si}/M_{pu}).(M_{pu}/M_r) \qquad (3)$$
$$b = 2,333.(R/100).(1 + a).(1/a)$$

Dans le domaine de l'invention, x est en général voisin de 0,5 et les masses volumiques du carbone et du polyuréthane étant environ de 2 et 0,8 respectivement, la formule (1) s'écrit:

$$R = 100.(0,5.2/0,8)/(1 + a) = 125/(1 + a) \tag{4}$$

En combinant (3) et (4), la valeur de $b = M_{Si}/M_r$ est égale à:

$$b = 2,333.(R/100).(1 + a).(1/a) = 2,917/a \tag{5}$$

Cette dernière relation (5) exprime que pour une masse $b.M_r$ de silicium, ajouté à une masse $M_r$ de résine lors de la préparation du mélange, le rapport a de la masse de résine à la masse de polyuréthane ne doit pas excéder 2,917/b.

Par exemple, pour une valeur de b de 0,79, la valeur maximale de a est 3,7 et le rendement R correspondant est de 27 % environ.

Pour les cas extrêmes:

x = 0,25 et a = 2,5, b est égal à 0,58

x = 1 et a = 5, b est égal à 1,17

En pratique, l'on prépare une suspension de silicium dans la résine dans les proportions définies par le coefficient b. On imprègne la mousse par simple immersion dans cette résine, éventuellement sous vide ou sous pression. On vérifie que la mousse est bien imprégnée à coeur. En général le taux d'imprégnation, constaté par pesée, est supérieur à la valeur du coefficient visé a. On élimine alors par essorage la quantité de résine excédentaire jusqu'à obtention de ce coefficient a que l'on contrôle par pesée. Cet essorage à 1000 tours/min peut prendre plusieurs heures.

Pour contrôler par pesée la quantité de produit d'imprégnation dans la mousse imprégnée, on utilise le rapport c de la masse totale (mousse + produit d'imprégnation) à la masse de mousse de polyuréthane. Ce rapport est égal à:

$$c = (M_{pu} + M_r + M_{Si})/M_{pu} = M_{pu}.( 1 + a + b.a)/M_{pu} = 1 + a.(b + 1) \tag{6}$$

ou encore, en combinant (5) et (6):

$$c_{max} = 3,917 + a = 3,917 + 2,917/b$$

On contrôlera donc l'essorage par pesées successives de l'échantillon. Il sera poursuivi jusqu'à ce que la masse totale soit égale ou inférieure à $c_{max}.M_{pu}$.

**c) polymérisation de la résine contenue dans la suspension par augmentation progressive de la température jusque 250°C avec une vitesse de montée en température voisine de 5°C/min;**

**d) carbonisation simultanée de la mousse de polyuréthane et de la résine par augmentation progressive de la température de 250°C à 1000°C avec une vitesse de montée en température comprise entre 1°C/min et 10°C/min sous atmosphère inerte;** par atmosphère inerte, on entend une atmosphère non réactive vis à vis du Si à haute température; celle-ci doit contenir en particulier moins de 100 ppm d'oxygène et moins de 1% d'azote; elle est avantageusement constituée par un débit d'argon de pureté commerciale.

Il a été également remarqué qu'on obtient les meilleures propriétés du carbure de Si final, si la vitesse moyenne du gaz de balayage lors de cette étape est comprise entre 0,01 et 1 cm/sec, et de préférence entre 0,05 et 0,2 cm/sec;

**e) carburation du silicium contenu dans la suspension de résine par le carbone issu de la carbonisation de la mousse et de la résine par augmentation progressive de la température de 1000°C à une température T comprise entre 1300 et 1600°C avec une vitesse de montée en température voisine de 3°C/min sous atmosphère inerte et maintien pendant deux heures à la température T, toujours sous atmosphère inerte.**

La vérification que tout le carbone disponible a été transformé en SiC peut se faire par simple pesée de la mousse de carbure. En effet, la masse de SiC, $M_{SiC}$ est liée à la masse de carbone $M_C$ par la relation stoechiométrique:

$$M_{SiC} = M_C . (40/12) = 3,333.M_C$$

Or d'après la relation (1),

$$R_x \text{ (en fraction)} = M_C/(M_{pu}.(1 + a))$$

$$M_C = R_x \cdot M_{pu} \cdot (1 + a)$$

$$M_{SiC}/M_{pu} = 3{,}333 \cdot R_x \cdot (1 + a)$$

Dans l'hypothèse où la relation (4) est vérifiée, on obtient finalement:

$$M_{SiC}/M_{pu} = 3{,}333 \cdot 1{,}25 = 4{,}17 \qquad (8)$$

Cette dernière relation permet de calculer la masse théorique de carbure de silicium que l'on doit obtenir à partir d'une masse donnée de polyuréthane initiale.

Le choix de la température finale T est dicté par l'importance du volume de mésoporosité que l'on veut atteindre. Ce volume est d'autant plus faible que la température T est plus élevée. Ainsi, pour la préparation de supports de catalyseurs, on préfère une température T comprise entre 1300°C et 1400°C alors que pour la préparation de filtres de moteurs Diesel, on préfère une température T supérieure, comprise entre 1400°C et 1600°C. Le produit obtenu est dans le premier cas un catalyseur ou support de catalyseur en carbure de silicium présentant une importante macroporosité ouverte permettant un accès facile aux gaz réactionnels, caractérisé en ce que sa surface BET est comprise entre 10 et 50 $m^2$/g, en ce que sa porosité, bimodale, comprend une mésoporosité centrée sur une valeur de diamètres de pores comprise entre 0,0275 et 0,0350 µm avec un écart-type inférieur à 0,0160 µm et une macroporosité centrée sur une valeur de diamètres de pores comprise entre 100 et 150 µm avec un écart-type inférieur à 50 µm et en ce que le carbure ne contient pas plus de 0,1 % en poids de silicium résiduel.

Si la mousse de polyuréthane initiale ne présente pas de porosité ouverte ou est de porosité ouverte insuffisante pour l'application envisagée, on peut avant les étapes a1) et a2) attaquer la mousse de polyuréthane avec une solution sodique de manière à obtenir la porosité ouverte recherchée. Cette attaque est de préférence effectuée dans une solution de soude à 4% (en poids) à une température de 65°C environ pendant 5 à 10 min environ.

La perméabilité des carbures selon l'invention a été comparée à celle d'un support de catalyseur classique, en cordiérite, de même forme et de même dimension. Il s'agit, en effet, d'une caractéristique d'usage très importante pour les catalyseurs de pot d'échappement qui ne doivent pas provoquer de perte de charge trop importante dans l'écoulement à débit élevé des gaz d'échappement.

La perte de charge par unité de longueur P/l est donnée par la formule:

$$P/l = \mu \cdot d / k_1 \cdot S + m \cdot d^2 / k_2 \cdot S^2$$

où

P est la perte de charge
l la longueur de l'échantillon
S la section de l'échantillon
µ la viscosité du fluide
m la masse volumique du fluide
d le débit volumique de fluide
$k_1$ et $k_2$ deux coefficients caractéristiques de la perméabilité de l'échantillon, $k_1$ étant le coefficient de perméabilité dite darcienne et $k_2$ le coefficient de perméabilité dite non darcienne.

Il faut noter que, toutes choses égales par ailleurs, la perte de charge P est d'autant plus faible, c'est-à-dire que la perméabilité est d'autant plus élevée que $k_1$ et $k_2$ sont plus grands.

Le tableau ci-après donne les valeurs des coefficients $k_1$ et $k_2$ pour le catalyseur classique de cordiérite et pour la mousse en SiC selon l'invention.

|  | $k_1$ ($m^2$) | $k_2$ (m) |
|---|---|---|
| Catalyseur cordiérite | $9.10^{-9}$ | $1{,}4.10^{-4}$ |
| Mousse de SiC | $8.10^{-9}$ | $1{,}4.10^{-4}$ |

Il ressort de ce tableau que les coefficients $k_1$ et $k_2$ sont du même ordre de grandeur pour le carbure de silicium selon l'invention que pour la cordiérite et que leurs perméabilités sont donc comparables.

La mousse de carbure de silicium peut alors, comme la cordiérite, être ensuite imprégnée d'une phase active à base de platine, de rhodium ou de palladium servant de catalyseur.

Le produit obtenu est dans le deuxième cas un filtre en carbure de silicium présentant une importante macroporosité ouverte permettant un accès facile aux gaz, caractérisé en ce que sa surface BET est inférieure à 5 $m^2$/g, en ce que sa porosité comprend une mésoporosité très faible et une macroporosité centrée sur une valeur de diamètres de pores comprise entre 100 et 150 $\mu m$ avec un écart-type compris entre 30 et 50 $\mu m$ et en ce que le carbure ne contient pas plus de 0,1 % en poids de silicium résiduel.

EXEMPLES.

Exemple 1.

Un échantillon de mousse de polyuréthane d'un volume de 90 $cm^3$, de masse volumique apparente de 0,03 g/$cm^3$ est attaqué par une solution de soude à 4% à 65 °C pendant 8 minutes. On constate une perte de masse de 18,4 %. La mousse, qui pesait 2,7 g au départ, ne pèse donc plus que 2,20 g. On prépare un mélange en poids de 95 % d'alcool furfurylique et de 5 % d'hexaméthylènetétramine servant de catalyseur de polycondensation, mais dont l'action ne commence qu'à partir de 170°C environ. Le mélange reste donc stable à la température ambiante, ce qui permet les opérations ultérieures sans polymérisation de la résine. A ce mélange on ajoute du silicium en poudre dont le diamètre moyen des grains est de 60 $\mu m$, à raison de 7,9 g de silicium pour 10 g de résine. Le coefficient b est donc égal à 0,79. La mousse de polyuréthane est alors immergée dans la suspension obtenue jusqu'à ce que l'imprégnation atteigne le coeur de la mousse. On procède ensuite à un essorage de façon à ce que le poids de résine imprégnant l'échantillon soit ramené à 5,52 g. Le poids de silicium est alors de 4,36 g et le poids total de l'échantillon imprégné de 12,08 g. Le coefficient a est égal à 5,52/2,20 = 2,51 et le rapport c est égal à 12,08/2,20 = 5,49, valeur inférieure à:

$$c_{max} = 3{,}917 + 2{,}917/b = 7{,}61$$

On est donc en présence d'un défaut d'imprégnation ce qui va se traduire par une quantité de SiC inférieure à la quantité théorique et la présence d'un excès de carbone dans la mousse carburée.

La mousse imprégnée est ensuite traitée thermiquement pour, successivement: polymériser la résine par augmentation de la température jusque 250°C avec une vitesse de montée en température voisine de 5°C/min; carboniser la mousse de polyuréthane et la résine par augmentation de la température de 250°C à 1000°C avec une vitesse de montée en température voisine de 1°C/min sous atmosphère non oxydante; carburer le silicium par le carbone issu de la carbonisation de la mousse et de la résine par augmentation de la température de 1000°C à 1350°C avec une vitesse de montée en température voisine de 3°C/min sous atmosphère non oxydante et maintien pendant deux heures à 1350°C, toujours sous atmosphère non oxydante.

Après ce traitement, le poids de mousse obtenu est de 6,98 g. Après un nouveau traitement, dans l'air à 800°C, on observe une perte de poids de 6,5 % correspondant à la combustion de l'excès de carbone qui ramène le poids de mousse de SiC à 6,53 g inférieur, d'après (8) à la quantité théorique maximale de 4,17. 2,20 = 9,174 g. La quantité de silicium résiduel est très inférieure à 1 %.

Exemple 2.

Un échantillon de mousse de polyuréthane d'un volume de 43,75 $cm^3$, de masse volumique apparente de 0,07 g/$cm^3$ est attaqué par une solution de soude à 4% à 65 °C pendant 8 minutes. On ne constate pas de perte de masse, la mousse utilisée étant à porosité ouverte. L'échantillon pèse donc 3,06 g. On prépare un mélange en poids de 95 % d'alcool furfurylique et de 5 % d'hexaméthylènetétramine comme dans l'exemple 1. A ce mélange on ajoute du silicium en poudre dont le diamètre moyen des grains est de 60 $\mu m$, à raison de 7,9 g de silicium pour 10 g de résine, comme dans l'exemple 1 et, pour faciliter l'imprégnation, 0,15 g de noir de carbone, toujours pour 10 g de résine. Le coefficient b reste égal à 0,79. La mousse de polyuréthane est alors immergée dans la suspension obtenue jusqu'à ce que l'imprégnation atteigne le coeur de la mousse. On procède ensuite à un essorage de façon à ce que le poids de résine imprégnant l'échantillon soit ramené à 11,74 g. Le poids de silicium est alors de 9,28 g et le poids total de l'échantillon imprégné de 24,08 g. Le coefficient a est égal à 11,74/3,06 = 3,84 et le rapport c est égal à 24,08/3,06 = 7,86, valeur légèrement supérieure à:

$$c_{max} = 3{,}917 + 2{,}917/b = 7{,}61$$

On est donc en présence d'un léger excès d'imprégnation ce qui devrait entrainer un léger excès de silicium compensé toutefois par l'ajout supplémentaire de noir de carbone dans la résine. En fait, on est très proche des quantités théoriques de carbone et de silicium ce qui va se traduire par une quantité de SiC très proche également de la quantité théorique sans excès de carbone dans la mousse carburée. En effet, après traitement thermique dans les conditions de l'exemple 1, le poids de mousse obtenu est de 13,30 g et, d'après (8) à la quantité théorique maximale est de 4,17. 3,06 = 12,8 g. La quantité de silicium résiduel reste inférieure à 1 %.

Exemple 3.

Un échantillon de mousse de polyuréthane d'un volume de 72 cm$^3$, de masse volumique apparente de 0,067 g/cm$^3$ est attaqué par une solution de soude à 4% à 65 °C pendant 8 minutes. On constate une perte de masse de 2,33 %. La mousse, qui pesait 4,83 g au départ, ne pèse donc plus que 4,72 g. On prépare un mélange en poids de 95 % d'alcool furfurylique et de 5 % d'hexaméthylènetétramine comme dans l'exemple 1. A ce mélange on ajoute du silicium en poudre dont le diamètre moyen des grains est de 60 μm, à raison de 7,9 g de silicium pour 10 g de résine. Le coefficient b est donc égal à 0,79. La mousse de polyuréthane est alors immergée dans la suspension obtenue jusqu'à ce que l'imprégnation atteigne le coeur de la mousse. On procède ensuite à un essorage de façon à ce que le poids de résine imprégnant l'échantillon soit ramené à 19,24 g. Le poids de silicium est alors de 15,2 g et le poids total de l'échantillon imprégné de 39,16 g. Le coefficient a est égal à 19,24/4,72 = 4,08 et le rapport c est égal à 39,16/4,72 = 8,30, valeur supérieure à:

$$c_{max} = 3,917 + 2,917/b = 7,61$$

On est donc en présence d'un excès d'imprégnation ce qui va se traduire par une quantité de SiC supérieure à la quantité théorique. En effet, après traitement thermique dans les conditions de l'exemple 1, le poids de mousse obtenu est de 23,1 g, supérieur, d'après (8) à la quantité théorique maximale de 4,17. 4,72 = 19,7 g. La quantité de silicium résiduel reste inférieure à 1 %.

Exemple 4.

La texture poreuse de la mousse de carbure obtenue dans l'exemple 2 a été déterminée en comparaison avec celle d'une mousse de carbure obtenue par réaction de mousse de carbone avec le monoxyde de silicium selon l'enseignement de la demande de brevet européen non publiée 92-420429 et repérée "SiO". Cette dernière mousse contenant après carburation une quantité notable de carbone n'ayant pas réagi, la comparaison porte aussi sur les mousses de carbure ayant subi un traitement ultérieur d'oxydation de 3 heures à l'air à 800°C destiné à éliminer ce carbone excédentaire. Ce traitement a aussi été appliqué à la mousse de l'exemple 2 bien qu'elle ne contienne que peu ou pas de carbone libre. Il est identifié dans le tableau ci-dessous par la mention "oxydé".

| MOUSSE | PORES | METH. m$^2$/g | MAX.ABSC. μm | MAX. ORD. cm$^2$/g | ECART-TYPE μm |
|---|---|---|---|---|---|
| EX 2 | méso | azote 39 | 0,0290 | 0,02106 | 0,0139 |
| EX 2 oxydé | méso | azote 26 | 0,0350 | 0,01825 | 0,0156 |
| SiO | méso | azote 152 | 0,0124 | 0,01825 | 0,0156 |
| SiO oxydé | méso | azote 36 | 0,0124 | 0,01825 | 0,0156 |
| EX 2 | méso | mercure | 0,0275 | 0,014 | 0,0087 |
| EX 2 | macro | mercure | 117,5 | 0,1025 | 41,97 |

La deuxième colonne indique la nature des pores (méso ou macropores) mise en évidence par la méthode utilisée qui est portée en troisième colonne: adsorption d'azote ou porosimètre à mercure. Dans le cas de l'adsorption d'azote, la surface BET est également donnée dans cette colonne. Les quatrième et cinquième colonnes indiquent l'abscisse (en μm) et l'ordonnée (en cm$^3$/g) du maximum dans la distribution du volume des pores en fonction de leur diamètre. Enfin la sixième colonne indique l'écart-type de la distribution.
Les conclusions que l'on tire de ce tableau sont les suivantes:

EP 0 624 560 B1

- les mousses de carbure selon l'exemple 2 de l'invention ont une distribution bimodale qu'elles aient ou non été oxydées: un premier mode est à 0,0290 µm (mousse non oxydée) ou à 0,0350 µm (mousse oxydée) avec des écarts-types respectifs de 0,139 et 0,156 µm. Le traitement d'oxydation a pour effet d'élargir le diamètre moyen des mésopores;
- les mousses de carbure obtenues à partir de SiO gazeux ont une distribution de mésopores centrée sur une valeur voisine plus faible avant oxydation et du même ordre après oxydation;
- les mousses de carbure selon l'exemple 2 présentent un deuxième mode à 117,5 µm (macropores). Sur la figure 1, la distribution des pores de l'échantillon de l'exemple 2 est représenté. On voit très bien que la distribution de ces macropores forme un pic très pointu centré sur 100-150 µm. C'est une des caractéristiques essentielles de ces mousses.
- enfin, on constate un bon accord entre les distributions de pores calculées par adsorption-désorption d'azote et celles mesurées au porosimètre à mercure.

Exemple 5.

Tous les exemples suivants ont été réalisés en imprégnant une mousse polyuréthane de masse 1,05 à 1,14 g, de porosité 20 pores par inch (25,4 mm); le mélange d'imprégnation est constitué de résine furfurylique (130 g), d'hexaméthylène tétramine (5 % en masse de la résine) et de silicium de granulométrie 3 à 5 microns dans les conditions données ci-après. Les surfaces spécifiques sont mesurées par adsorption d'azote après pyrolyse à l'air du produit (SiC sans carbone résiduel).

1. Effet du profil thermique et de la température de palier :

|  | b | c | profil thermique | v linéaire d'argon dans le réacteur | surf.spécif. |
|---|---|---|---|---|---|
| Essai 1 | 0,7 | 7,8 | A* | 0,4 cm/s | 7,8 m2/g |
| Essai 2 | 0,7 | 7,5 | B** | 0,4 cm/s | 4,7 m2/g |
| Essai 3 | 0,7 | 7,6 | C*** | 0,4 cm/s | 1,3 m2/g |

avec

A* : 5°C/min    20°C ⟶ 250°C
1°C/min    250°C ⟶ 1000°C
3°C/min    1000°C ⟶ 1350°C
3 h à 1350°C

B**: 1°C/min    20°C ⟶ 800°C
0,3°C/min    800°C ⟶ 1350°C
3 h à 1350°C.

C*** 5°C/min    20°C ⟶ 250°C
1°C/min    250°C ⟶ 1000°C
3°C/min    1000°C ⟶ 1500°C
3 h à 1500°C.

9

2. Effet du débit de gaz inerte (ou vitesse linéaire du gaz inerte pour s'affranchir de la géométrie du réacteur)

|  | b | c | profil thermique | v linéaire d'argon | surf.spéc. |
|---|---|---|---|---|---|
| Essai 1 | 0,7 | 7,8 | A* | 0,4 cm/s | 7,8 m2//g |
| Essai 4 | 0,7 | 7,5 | A* | 0,2 cm/s | 14,4 m2/g |
| Essai 5 | 0,7 | 7,5 | A* | 0,08 cm/s | 20,4 m2/g |

3. Effet du facteur b

$$b = \text{Masse Si /Masse de résine}$$

|  | b | c | profil thermique | v linéaire argon | surf.spéc. |
|---|---|---|---|---|---|
| Essai 1 | 0,7 | 7,8 | A | 0,4 cm/s | 7,8 m2/g |
| Essai 6 | 0,5 | 7,5 | A | 0,4 cm/s | 13,2 m2/g |

## Revendications

1.  Procédé de fabrication de mousse de carbure de silicium pratiquement pur à partir d'une mousse de polyuréthane comprenant les étapes suivantes:

    a) préparation d'une mousse de polyuréthane comprenant:

    a1) une imprégnation de celle-ci avec une suspension de Si en poudre dans au moins une résine organique oxygénée et un solvant éventuel, le rapport pondéral du Si à la résine étant compris entre 0,58 et 1,17 et le pourcentage d'oxygène dans le polymère obtenu à partir de la résine étant d'au moins 15% (en poids);
    a2) l'élimination de l'excédent de suspension de telle sorte que le rapport de la masse de résine à la masse de polyuréthane soit compris entre 2,5 et 5.

    b) élimination éventuelle du solvant par chauffage;

    c) polymérisation de la résine par augmentation progressive de la température jusque 250°C avec une vitesse de montée en température voisine de 5°C/min;

    d) carbonisation simultanée de la mousse de polyuréthane et de la résine par augmentation progressive de la température de 250°C à 1000°C sous atmosphère inerte comprenant moins de 100 ppm d'oxygène et moins de 1% d'azote;

    e) carburation du silicium contenu dans la suspension de résine par le carbone issu de la carbonisation de la mousse et de la résine par augmentation progressive de la température de 1000°C à une température T comprise entre 1300 et 1600°C avec une vitesse de montée en température voisine de 3°C/min sous atmosphère inerte et maintien pendant deux heures à la température T, toujours sous ladite atmosphère inerte;

    f) refroidissement du carbure de silicium ainsi obtenu;

2.  Procédé de fabrication de mousse de carbure de Si à grande surface spécifique à partir de mousse de polyuréthane suivant la revendication 1 caractérisé en ce qu'à l'étape d) la vitesse moyenne de montée en température est comprise entre 1 et 10°C/min, en ce que à l'étape e) la température T est comprise entre 1300 et 1400°C.

**3.** Procédé selon la revendication 2 caractérisé en ce que l'atmosphère inerte est constituée d'argon commercialement pur.

**4.** Procédé selon l'une des revendications 2 ou 3 caractérisé en ce que, lors de l'étape d), la vitesse moyenne de circulation de l'atmosphère est comprise entre 0,01 et 1 cm/sec, et de préférence entre 0,05 et 0,2 cm/sec.

**5.** Procédé de fabrication de mousse de carbure de silicium à partir d'une mousse de polyuréthane selon la revendication 1, caractérisé en ce que la température T est comprise entre 1400 et 1600°C.

**6.** Procédé de fabrication de mousse de carbure de silicium selon l'une des revendications 1 à 5, caractérisé en ce que le polymère obtenu à partir de la résine contient dans sa molécule au moins 25% en poids d'atomes d'oxygène.

**7.** Procédé de fabrication de mousse de carbure de silicium selon la revendication 6, caractérisé en ce que la résine contenue dans la suspension est une résine furfurylique.

**8.** Procédé de fabrication de mousse de carbure de silicium selon l'une des revendications 1 à 7, caractérisé en ce que le silicium contenu dans la suspension a une granulométrie centrée sur une valeur moyenne inférieure à 75 micromètres.

**9.** Procédé de fabrication de mousse de carbure de silicium selon la revendication 8, caractérisé en ce que le silicium contenu dans la suspension a une granulométrie moyenne inférieure à 10 micromètres.

**10.** Procédé de fabrication de mousse de carbure de silicium selon les revendications 1 à 9, caractérisé en ce que le carbure de silicium est soumis finalement à un traitement d'oxydation pour éliminer un excès éventuel de carbone.

**11.** Procédé de fabrication de mousse de carbure de silicium selon l'une des revendications 1 à 10, caractérisé en ce qu'avant l'étape a1), une attaque par une solution alcaline est effectuée avec une solution de soude à 4% environ à 65°C pendant 5 à 10 minutes.

**12.** Procédé de fabrication d'un catalyseur à support en carbure de silicium à grande surface spécifique selon les revendications 1 à 5 et 8 à 11, caractérisé en ce que le carbure de silicium est ensuite imprégné d'une phase active à base de platine, de rhodium ou de palladium.

**13.** Carbure de silicium destiné en particulier à servir de catalyseur ou de support de catalyseur et présentant une importante macroporosité ouverte permettant un accès facile aux gaz réactionnels caractérisé en ce que sa surface BET est comprise entre 10 et 50 $m^2$/g, en ce que sa porosité, bimodale, comprend une mésoporosité centrée sur une valeur de diamètres de pores comprise entre 0,0275 et 0,0350 μm avec un écart-type inférieur à 0,0160 μm et une macroporosité centrée sur une valeur de diamètres de pores comprise entre 100 et 150 μm avec un écart-type inférieur à 50 μm, en ce que le carbure ne contient pas plus de 0,1 % en poids de silicium résiduel.

**14.** Carbure de silicium destiné en particulier à servir de catalyseur ou de support de catalyseur selon la revendication 13, caractérisé en ce que le coefficient $k_1$ de sa perméabilité darcienne est compris entre 4 et 12. $10^{-9}m^2$ et le coefficient $k_2$ de sa perméabilité non darcienne est compris entre 1,1 et 1,7. $10^{-4}m$.

**15.** Carbure de silicium destiné en particulier à la fabrication de filtres pour gaz d'échappement de moteurs Diesel, obtenu selon le procédé de la revendication 5, caractérisé en ce que sa surface BET est inférieure à 5 $m^2$/g, en ce que sa porosité comprend une mésoporosité très faible et une macroporosité centrée sur une valeur de diamètres de pores comprise entre 100 et 150 μm avec un écarttype compris entre 30 et 50 μm et en ce que le carbure ne contient pas plus de 0,1 % en poids de silicium résiduel.

**16.** Application du carbure de silicium selon l'une des revendications 14 ou 15 à la fabrication de pots catalytiques.

**17.** Application du carbure de silicium selon la revendication 16 à la fabrication de filtres pour gaz d'échappement de moteurs Diesel.

**Claims**

1. Process for manufacturing silicon carbide foam from a polyurethane foam comprising the following steps :

   a) preparation of a polyurethane foam comprising :

   a1) impregnation of the latter with a suspension of Si in powder form in at least one oxygenated organic resin and an optional solvent, the ratio by weight of Si to the resin being between 0.58 and 1.17 and the polymer obtained from the resin to containing at least 15% by weight of oxygen atoms .
   a2) elimination of the excess suspension so that the ratio of the weight of resin to the weight of polyurethane is between 2.5 and 5 ;

   b) elimination, if necessary, of any solvent by heating .
   c) polymerisation of the resin by progressively increasing the temperature to 250°C with a rate of temperature rise of around 5°C/min .
   d) simultaneous carbonisation of the polyurethane foam and resin by progressively increasing the temperature from 250°C to 1000°C in an inert atmosphere comprising less than 100 ppm of oxygen and less than 1% nitrogen ;
   e) carburising of the silicon contained in the resin suspension by means of the carbon originating from the carbonisation of the foam and resin by progressively increasing the temperature from 1000°C to a temperature T of between 1300 and 1600°C with a rate of temperature rise of around 3°C/min in an inert atmosphere and maintaining at the temperature T for two hours, all the time in an inert atmosphere ;
   f) cooling of the silicon carbide thus obtained ;

2. Process for manufacturing Si carbide foam with a high specific surface area from polyurethane foam according to claim 1, characterised in that at step d) the mean rate of temperature rise is between 1 and 10°C/min, in that at step e) the temperature T is between 1300 and 1400°C.

3. Process according to Claim 2, characterised in that the inert atmosphere consists of commercially pure argon.

4. Process according to one of Claims 2 or 3, characterised in that, during step d), the mean velocity of circulation of the atmosphere is between 0.01 and 1 cm/sec and preferably between 0.05 and 0.2 cm/sec.

5. Process for manufacturing silicon carbide foam from a polyurethane foam according to Claim 1, characterised in that the temperature is between 1400 and 1600°C.

6. Process for manufacturing silicon carbide foam according to one of Claims 1 to 5, characterised in that the polymer obtained from the resin contains in its molecule at least 15% by weight of oxygen atoms and preferably at least 25% by weight of oxygen atoms.

7. Process for manufacturing silicon carbide foam according to Claim 6, characterised in that the resin contained in the suspension is a furfuryl resin.

8. Process for manufacturing silicon carbide foam according to one of Claims 1 to 7, characterised in that the silicon contained in the suspension has a particle size centred on a mean value of less than 75 micrometres.

9. Process for manufacturing Silicon carbide foam according to Claim 8, characterised in that the silicon contained in the suspension has a mean particle size of less than 10 micrometres.

10. Process for manufacturing silicon carbide foam according to Claims 1 to 9, characterised in that the silicon carbide is subjected finally to an oxidation treatment in order to eliminate any excess of carbon.

11. Process for manufacturing silicon carbide foam according to one of Claims 1 to 10, characterised in that, before step a1), an attack by means of an alkaline solution is effected with an approximately 4% sodium solution at 65°C for 5 to 10 minutes.

12. Process for manufacturing a catalyst with a silicon carbide carrier with a large specific surface area according to Claims 1 to 5 and 8 to 11, characterised in that the silicon carbide is then impregnated with an active phase based on platinum, rhodium or palladium.

13. Silicon carbide intended in particular to serve as a catalyst or catalyst carrier and having a large open macroporosity allowing easy access to the reaction gases, characterised in that its BET surface area is between 10 and 50 $m^2$/g, in that its bimodal porosity comprises a mesoporosity centred on a pore diameter value of between 0.0275 and 0.0350 $\mu$m with a standard deviation of less than 0.0160 $\mu$m and a macroporosity centred on a pore diameter value of between 100 and 150 $\mu$m with a standard deviation of less than 50 $\mu$m, in that the carbide contains not more than 0.1% by weight of residual silicon.

14. Silicon carbide intended in particular to serve as a catalyst or catalyst carrier according to Claim 13, characterised in that the coefficient $k_1$ of its darcian permeability is between 4 and 12 x $10^{-9}$ $m^2$ and the coefficient $k^2$ of its non-darcian permeability is between 1.1 and 1.7 x $10^{-4}$ m.

15. Silicon carbide intended in particular for the manufacture of filters for diesel engine exhaust gases, obtained according to the process of claim 5, characterised in that its BET surface area is less than 5 $m^2$/g, in that its porisity comprises a very low mesoporosity and a macroporosity centred on a pore diameter value of between 100 and 150 $\mu$m with a standard deviation of between 30 and 50 $\mu$m, and in that the carbide contains no more than 0.1% by weight of residual silicon.

16. Application of the silicon carbide according to one of claims 14 or 15 to the manufacture of catalytic chambers.

17. Application of the silicon carbide according to claim 16 to the manufacture of filters for diesel engine exhaust gases.

**Patentansprüche**

1. Verfahren zur Herstellung von praktisch reinem Siliziumkarbidschaum aus einem Polyurethanschaum mit folgenden Schritten :

   a) Herstellung eines Polyurethanschaums, bei der :

   a1) dieser getränkt wird mit einer Suspension aus pulvrigem Silizium in mindestens einem sauerstoffhaltigen organischen Harz und einem eventuellen Lösungsmittel, wobei das Gewichtsverhältnis Si zu Harz im Bereich von 0,58 bis 1,17 liegt und der Sauerstoffanteil in dem aus dem Harz gewonnenen Polymer mindestens 15 % (des Gewichts) beträgt ;
   a2) der Suspensionsüberschuss entfernt wird, so dass das Verhältnis Harzmasse zu Polyurethanmasse im Bereich von 2,5 bis 5 liegt.

   b) Eventuelle Entfernung des Lösungsmittels durch Erwärmung ;

   c) Polymerisation des Harzes durch schrittweise Erhöhung der Temperatur bis auf 250°C mit einer Temperaturanstiegsgeschwindigkeit nahe 5°C/min ;

   d) Gleichzeitige Verkohlung des Polyurethanschaums und Harzes durch schrittweise Erhöhung der Temperatur von 250°C auf 1000°C unter Inertatmosphäre mit weniger als 100 ppm Sauerstoff und weniger als 1% Stickstoff ;

   e) Karburierung des in der Harzsuspension enthaltenen Siliziums mit dem bei der Verkohlung des Schaums und Harzes entstandenen Kohlenstoff durch schrittweise Erhöhung der Temperatur von 1000°C auf eine Temperatur T von 1300 bis 1600°C mit einer Temperaturanstiegsgeschwindigkeit nahe 3°C/min unter Inertatmosphäre und Halten der Temperatur T während zwei Stunden wiederum unter Inertatmosphäre ;

   f) Abkühlung des auf diese Weise erhaltenen Siliziumkarbids.

2. Verfahren zur Herstellung von Siliziumkarbidschaum mit grosser spezifischer Oberfläche aus Polyurethanschaum nach Anspruch 1, dadurch gekennzeichnet, dass im Schritt d) die mittlere Temperaturanstiegsgeschwindigkeit im Bereich von 1 bis 10°C/min liegt, dass im Schritt e) die Temperatur T im Bereich von 1300 bis 1400°C liegt.

3. Verfahren nach Anspruch 2, dadurch gekennzeichnet, dass die Inertatmosphäre aus handelsüblich reinem Argon besteht.

4. Verfahren nach einem der Ansprüche 2 oder 3, dadurch gekennzeichnet, dass beim Schritt d) die mittlere Umlaufgeschwindigkeit der Atmosphäre im Bereich von 0,01 bis 1 cm/sec und vorzugsweise 0,05 bis 0,2 cm/sec liegt.

5. Verfahren zur Herstellung von Siliziumkarbidschaum aus einem Polyurethanschaum nach Anspruch 1, dadurch gekennzeichnet, dass die Temperatur T im Bereich von 1400 bis 1600°C liegt.

6. Verfahren zur Herstellung von Siliziumkarbidschaum nach einem der Ansprüche 1 bis 5, dadurch gekennzeichnet, dass das aus dem Harz gewonnene Polymer in seinem Molekül mindestens 25 Gew.-% Sauerstoffatome enthält.

7. Verfahren zur Herstellung von Siliziumkarbidschaum nach Anspruch 6, dadurch gekennzeichnet, dass das in der Suspension enthaltene Harz ein Furfuralharz ist.

8. Verfahren zur Herstellung von Siliziumkarbidschaum nach einem der Ansprüche 1 bis 7, dadurch gekennzeichnet, dass das in der Suspension enthaltene Silizium eine auf einen Mittelwert von weniger als 75 Mikrometer eingestellte Korngröße hat.

9. Verfahren zur Herstellung von Siliziumkarbidschaum nach Anspruch 8, dadurch gekennzeichnet, dass das in der Suspension enthaltene Silizium eine mittlere Korngröße von weniger als 10 Mikrometer hat.

10. Verfahren zur Herstellung von Siliziumkarbidschaum nach Anspruch 1 bis 9, dadurch gekennzeichnet, dass das Siliziumkarbid schließlich einer Oxidationsbehandlung unterworfen wird, um einen eventuellen Kohlenstoffüberschuß zu entfernen.

11. Verfahren zur Herstellung von Siliziumkarbidschaum nach einem der Ansprüche 1 bis 10, dadurch gekennzeichnet, dass vor dem Schritt a1) eine Ätzung mit einer alkalischen Lösung durchgeführt wird, und zwar mit einer etwa 4%igen Natronlauge bei 65°C während 5 bis 10 Minuten.

12. Verfahren zur Herstellung eines Katalysators mit Träger aus Siliziumkarbid mit großer spezifischer Oberfläche nach Anspruch 1 bis 5 und 8 bis 11, dadurch gekennzeichnet, dass das Siliziumkarbid anschliessend mit einer aktiven Phase auf Basis von Platin, Rhodium oder Palladium getränkt wird.

13. Siliziumkarbid, insbesondere zur Verwendung als Katalysator oder Katalysatorträger, mit einer hohen offenen Makroporosität, die einen leichten Zugang zu den Reaktionsgasen ermöglicht, dadurch gekennzeichnet, dass seine BET-Oberfläche im Bereich von 10 bis 50 $m^2/g$ liegt, dass seine bimodale Porosität eine auf einen Porendurchmesserwert von 0,0275 bis 0,0350 μm eingestellte Mesoporosität mit einer Standardabweichung von weniger als 0,0160 und eine auf einen Porendurchmesserwert von 100 bis 150 μm eingestellte Makroporosität mit einer Standardabweichung von weniger als 50 μm umfasst, dass das Karbid nicht mehr als 0,1 Gew.-% Restsilizium enthält.

14. Siliziumkarbid, insbesondere zur Verwendung als Katalysator oder Katalysatorträger nach Anspruch 13, dadurch gekennzeichnet, dass der Koeffizient $k_1$ seiner Darken-Permeabilität im Bereich von 4 bis 12. $10^{-9}m^2$ und der Koeffizient $k_2$ seiner Nicht-Darken-Permeabilität im Bereich von 1,1 bis 1,7. $10^{-4}m$ liegt.

15. Siliziumkarbid, insbesondere zur Herstellung von Filtern für Dieselmotorauspuffgase, hergestellt nach dem Verfahren des Anspruchs 5, dadurch gekennzeichnet, dass seine BET-Oberfläche kleiner als 5 $m^2/g$ ist, dass seine Porosität eine sehr schwache Mesoporosität und eine auf einen Porendurchmesserwert von 100 bis 150 μm eingestellte Makroporosität mit einer Standardabweichung von 30 bis 50 μm umfasst und dass das Karbid nicht mehr als 0,1 Gew.-% Restsilizium enthält.

16. Anwendung des Siliziumkarbids nach einem der Ansprüche 14 oder 15 auf die Herstellung von Katalysatoren für Auspuffanlagen.

17. Anwendung des Siliziumkarbids nach Anspruch 16 auf die Herstellung von Filtern für Dieselmotorauspuffgase.

FIG 1